(19) Europäisches Patentamt
European Patent Office
Office européen des brevets

(11) EP 1 797 992 A1

(12) EUROPEAN PATENT APPLICATION

(43) Date of publication:
20.06.2007 Bulletin 2007/25

(51) Int Cl.:
B23Q 17/09 (2006.01)

(21) Application number: 06126222.6

(22) Date of filing: 15.12.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 15.12.2005 US 750723 P

(71) Applicant: Ingersoll Machine Tools, Inc.
Rockford IL 61103 (US)

(72) Inventors:
• Bourne, Keith
Urbana, IL 61801 (US)
• DeVor, Richard E.
Urbana, IL 61801 (US)
• Kapoor, Shiv G.
Champaign, IL 61821 (US)

(74) Representative: Hoeger, Stellrecht & Partner
Patentanwälte
Uhlandstrasse 14 c
70182 Stuttgart (DE)

(54) **Determining cutting tool dimensions and run-out using acoustic emissions**

(57) An apparatus and method are provided for inputting parameters relating to a cutting tool and the surface of a work piece to an automated machining center, through use of acoustic emissions generated when a cutting tool is brought into contact with a work piece and/or a reference surface.

FIG. 1

**Description**

CROSS-REFERENCE TO RELATED PATENT APPLICATIONS

This patent application claims the benefit of U.S. Provisional Patent Application No. 60/750,723, filed December 15, 2005, with the disclosure and teachings thereof being incorporated herein, in their entireties, by reference.

FIELD OF THE INVENTION

This invention relates generally to the automated machining of materials, and more particularly to determining parameters relating to cutting tools used in such machining, with such parameters including tool length, profile, and spindle run-out.

BACKGROUND OF THE INVENTION

In order to accurately perform machining operations utilizing automated computer-controlled equipment, it is necessary for the computerized controls to know certain parameters relating to the shape and position of the tool being used for removal of material. For example, for drills and end mills, it is necessary to know the location of the end of the tool, with respect to a reference coordinates system. For some end mill configurations, and other tools, such as a counter-sink, it is also necessary for the computerized controls to know the profile of the particular cutter being used. It is further typically important, where accurate dimensional control must be held, for the computerized control to take into account any spindle run-out in the machining center, or in devices, such as collets or chucks utilized for connecting the cutting tool to the machining center.

Determining parameters of the cutting tools, such as those described above, can be particularly difficult, and important, where the surface of the work piece, to which the cutting tool is being applied, is curved, undulating, or rough in texture.

In the past, in order for the tool dimensions to be known precisely enough to make highly accurate parts, it was often necessary to measure the cutting tool prior to loading it into the machine, so that certain machine parameters could be set according to the measurements taken of the cutting tool. Alternatively, the machine itself was sometimes utilized for measuring the cutting tool, through the use of feedback devices such as laser beams or touch sensors. Such prior approaches to inputting parameters relating to the cutting tool significantly increase the complexity of machining operations, and significantly and undesirably increase set-up and machining times. The additional operations required also significantly increase the potential for errors in the set-up and operation of the machine.

For example, in one commonly performed machining operation, widely used in the aerospace industry, holes must be drilled and counter sunk accurately to tightly toleranced depths of the counter sunk hole, with respect to the part surface. In the past, in order to achieve the required degree of accuracy, it was not only necessary to pre-measure, and input parameters relating to the dimensions of the cutting tool into the computerized controls, as described above, but it was further necessary that the actual location of the part surface be known prior to machining, with respect to the reference coordinates system of the machine.

In the past, location of the actual part surface was accomplished with touch sensors, which detected the part surface and provided inputs to the computerized control of the machine which were used to adjust the coordinate system of the machine accordingly. Such touch sensors must operate in a hostile environment where chips are generated, requiring that the touch sensor be of robust construction, and that the method and apparatus incorporating the touch sensor be capable of operation in the hostile environment without being affected by the presence of chips or other contamination.

All of the above described problems and difficulties are magnified considerably, in micro-machining operations, where the parameters relating to cutting tool dimension and part shapes and/or location are so small as to approach the minimum dimensions detectable by the devices or apparatuses commonly used for making the measurements. As more and more precision and accuracy is required, in measurement of the tool and work piece surfaces, the amount of time required and potential for errors increases significantly.

Tool setting in micro-scale machining is more difficult due to the size-scale involved. Also, variations in work piece orientation caused by limitations in fixturing techniques dictate that a work piece will usually not be positioned in a precisely known location or orientation. Therefore, tool tip location strategies traditionally employed in macro-scale machining centers are not adequate at the micro-scale.

To date, very little research has been conducted on locating micro-endmills and drills relative to work pieces at the micro-scale. Langstaff et al. addressed this problem with a two-step laser-based system in which a work piece was scanned via a laser displacement sensor at an offline metrology station and the tool tip location was detected on-machine with a separate optical occlusion sensor. Langstaff G., "Development of Automation Technologies for Microfactory Automation, Master's Thesis, University of Illinois, Urbana IL", 2005. However, tool placement accuracy was limited to 50 $\mu$m due to compound error introduced by combining the two separate measurements. Furthermore, this method required two separate sensing procedures that are somewhat time-consuming.

Several researchers have used acoustic emission (AE) sensing to address the general problem of contact detection and characterization. AE has particular appeal in contact sensing applications because the exact position of the sensor is not critical provided that it is in close proximity to the contact event. AE sensors have been used as slip detectors for robot grippers, Dornfeld D., and Handy C., "Slip Detection Using Acoustic Emission Signal Analysis ", Proceedings - IEEE International Conference on Robotic and Automation, pp. 1868 - 1875, 1987; Shinoda H., and Ando S., "Ultrasonic Emission Tactile Sensor for Contact Localization and Characterization ", Proceedings - IEEE International Conference on Robotics and Automation, pp. 2536 - 2543, 1994. and as tactile sensors to detect surface roughness. Dunegon H. L., "An Acoustic Emission Technique for Measuring Surface Roughness", DECI Technical Report #9810, http://www.deci.com/publications.html, 1998. Additionally, seal contact in power generation turbines, Mba D., Cooke A., Ruby D., and Hewitt G. "Detection of Shaft-Seal Rubbing in Large-Scale Power Generation Turbines with Acoustic Emissions. Case Study", Proceedings of the iInstitution of Mechanical Engineers, part A: Journal of Power and Energy, vol. 218, no. 2, pp. 71-81. 2004, and head-disk interaction in hard drives have been monitored using AE signals, Youmin L., Chi L., and Atef E., "Acoustic Emission Study of Lubricant Effect on Proximity Contact Recording", IEEE Transactions on Magnetics, vol. 33, no. 5, Sept. 1997. Also, at the macro-scale, Dornfeld et al. have found that the distance between a grinding wheel and a workpiece can be detected by using an acoustic emission sensor to pick up vibrations induced by contact and by turbulent air in the contact region. Dornfeld D., and Cai H. G., "An investigation of Grinding and Wheel Loading Using Acoustic Emission", Journal of Engineering for Industry, vol. 106, pp 28-33, 1984. However, at the micro-scale contact energies are much smaller, the effect of surface characteristics is larger, and the issue of surface and tool damage is more acute.

Prior to the present invention, however, no one has recognized that acoustic emission sensing might be applied in practical applications and methodologies for precisely determining parameters, such as tool dimension and shape, spindle run-out, and location of the surface of a work piece, which are critical to successful precision machining operations at both a micro and a macro machining level.

What is needed, therefore, is an improved apparatus and method for precisely determining parameters, such as tool dimension and shape, spindle run-out, and location of the surface of a work piece, in a manner which is conducive to utilization in modern high-speed automated machining equipment and operations.

BRIEF SUMMARY OF THE INVENTION

The invention provides an improved apparatus and method for inputting parameters relating to a cutting tool and the surface of a work piece to an automated machining center, through use of acoustic emissions generated when a cutting tool is brought into contact with a work piece and/or a reference surface, under controlled conditions.

In one form of the invention, parameters relating to the configuration of a cutting tool, such as the tool length, for example, may be determined relative to a known surface of a work piece, or reference surface. The known work piece surface could, for example, be a qualified surface or diameter within the operating envelope of the machine. Where a reference, surface simulating the actual surface 110 of the work piece as provided. Practice of the invention may include a subroutine which utilizes the touch-points determined through acoustic emission detection, in accordance with the invention, for determining a parameter of the cutting tool, such as tool length or diameter, and inputting such a determined parameter to the controller for the machine.

Other embodiments of the invention may be utilized for providing input parameters to a computer-controlled machine tool, where a cutting tool configuration is known, but the location of a work piece surface is unknown. Such a condition may arise, for example, in machining operations on the skin of an airplane. The large size of the work piece, and other factors such as thermal expansion and/or contraction of the work piece in response to temperature of the working environment create an uncertainty of several millimeters for any given point on the aircraft skin. In the past, the head of the machine tool had to approach to the skin at a reduced feed rate, allowing a touch sensor to come into contact with the skin. The computerized controller for the machine then utilized the location of the skin, as determined by the touch sensor, in conjunction with a known profile of the cutting tool, to utilize the sensed location of the outer surface of the skin for setting the hole depth to zero. Through practice of the invention, the touch sensor, and operations related to the use of such a touch sensor are eliminated, with the first contact between the tool and skin, as detected through acoustic emissions, being used to set the hole depth to zero. The invention may also be used with great efficacy in machining of an unfinished part, where the exact surface location and configuration of the stock material is unknown.

In other embodiments, the invention may be utilized for situations in which neither the tool dimension, nor the precise location of the work piece surface is known, by utilizing changes in acoustic emission as the tool is brought into contact with the part surface, under controlled conditions, to determine relative positions of the part surface and the tool. For example, where holes of a particular depth are to be drilled into a somewhat flexible or warped work piece, such as a piece of sheet metal having a surface which may include inherent waviness or undulations, the invention may be utilized to determine a point of contact of a cutting tool with the unknown surface of the work piece, even if the cutting tool length is also unknown, by detecting a change in acoustic emissions. Once the intersection of the tool and surface are known, in accordance with the invention, the machine tool may then drill the hole to the desired depth. Each hole in the work piece is drilled in a similar manner, with the surface of the work piece at each hole location being individually determined, in accordance with the invention, without the exact length of the cutting tool ever being known.

In yet other embodiments, the invention may be utilized for situations in which neither the tool dimension, nor the location of the work piece surface is initially known, by utilizing changes in acoustic emission as the tool is brought into contact with the part surface, under controlled conditions, to determine relative positions of the part surface and the tool, with respect to a common coordinate system of the machine. These relative positions may then be used, according to the invention, in conjunction with other reference points determined through acoustic emissions as the tool is brought into controlled contact with a known reference surface, for determining the work piece surface and/or parameters relating to the shape and location of the tool.

The invention may be practiced in either conventional, or micro-machining operations.

The invention may also be utilized for determining run-out of a spindle-driven element, or the spindle itself, through detection of acoustic emissions, as the element (in the form of a probe or a cutting tool, for example) attached to the spindle is brought into contact with a known reference surface, while the spindle is rotating.

Other aspects, objects, and advantages of the invention will be apparent from the description and drawings included in the accompanying attachments.

BRIEF DESCRIPTION OF THE DRAWINGS

The accompanying drawings, incorporated in and forming a part of the specification, illustrate several aspects and exemplary embodiments of the present invention and which serve to explain the principles of the invention.

FIG. 1 is a graphical illustration of an output signal from an acoustic emission (AE) sensor, during touch-off of a micro endmill with a work piece surface, in accordance with the invention;

FIGS. 2A and 2B are schematic cross-sections illustrating initial contact between various shaped tools and an incline surface of a work piece;

FIG. 3 illustrates the manner in which the invention may be utilized for calculating tool-work piece contact points, using a multipoint touch-off algorithm, according to the invention;

FIGS. 4 and 4A, in combination, show an exemplary embodiment of a machining apparatus, according to the invention, including a milling machine and a touch-off AE detection-based control arrangement;

FIG. 5 is a graph illustrating z stage overshoot, as a function of approach speed, in a micro-milling machine operated in accordance with the invention;

FIG. 6 is a graphical illustration of experimental results showing the effect of detection threshold and wear on surface location error with a 50.8 $\mu$m diameter endmill;

FIG. 7 is a schematic illustration of various parameters utilized in a touch-off model, according to the invention;

FIG. 8 is a graphical illustration of calibration of a model, in accordance with the invention, for particular work piece materials and work piece surface roughness conditions;

FIG. 9 is a graph illustrating experimental verification of a model, in accordance with the invention;

FIG. 10 is a graphical illustration of the effect of detection threshold, varying surface roughness, and tool diameter, on predicted undershoot, when utilizing a model in accordance with the invention; and

FIG. 11 illustrates an apparatus and method, according to the invention, for determining spindle runout, through the use of AE detection, in accordance with the invention.

While the invention will be described in connection with certain preferred embodiments, there is no intent to limit it to those embodiments. On the contrary, the intent is to cover all alternatives, modifications and equivalents as included within the spirit and scope of the invention.

DETAILED DESCRIPTION OF THE INVENTION

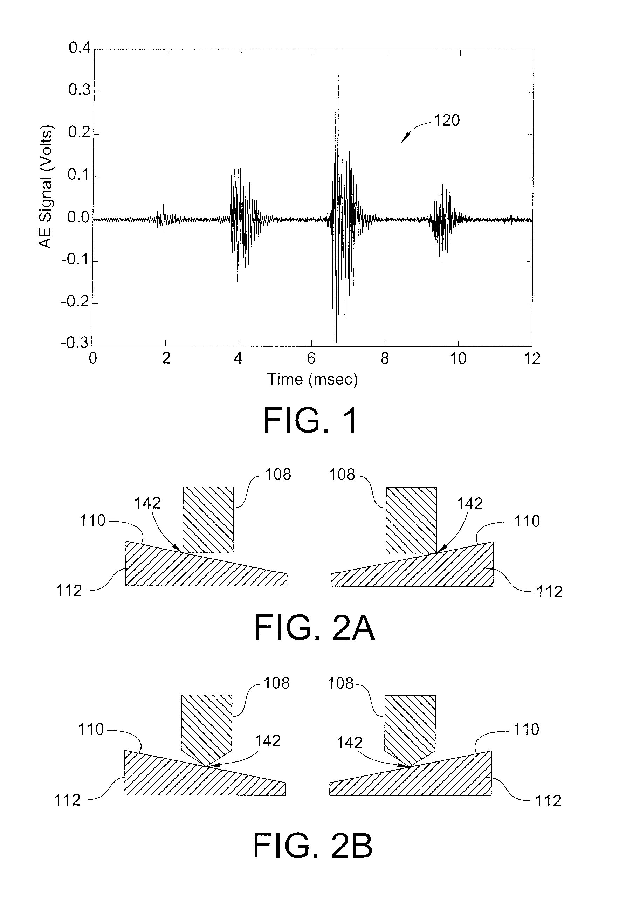

FIGS. 1-10 illustrate exemplary embodiments of the invention which are specifically directed to micro-machining applications of the invention. Those having skill in the art will readily recognize, however, that the invention may also be practiced with considerable efficacy in standard, non-micro-machining operations.

An acoustic emission-based touch-off detection system has been developed to determine the relative orientation between a rotating micro-tool and a work piece surface with micron-level accuracy. The system has been implemented on an existing 3-axis micro-scale machine tool (mMT). The system has been tested with micro-endmills as small as 50 $\mu$m in diameter and micro-drills as small as 254 $\mu$m in diameter. The accuracy of the system has been found to depend on tool geometry and work piece surface characteristics and is generally on the order of one micron. An analytical model has been constructed to predict touch-off detection error. The calibrated model has been shown to predict surface overshoot and undershoot trends quite well. Simulations have shown that touch-off error is dominated by surface roughness.

**Introduction**

According to an exemplary embodiment of the invention, described below in relation to FIGS. 1-10, an acoustic emission-based method and apparatus for detecting tool-work piece contact in micro-machining is provided.

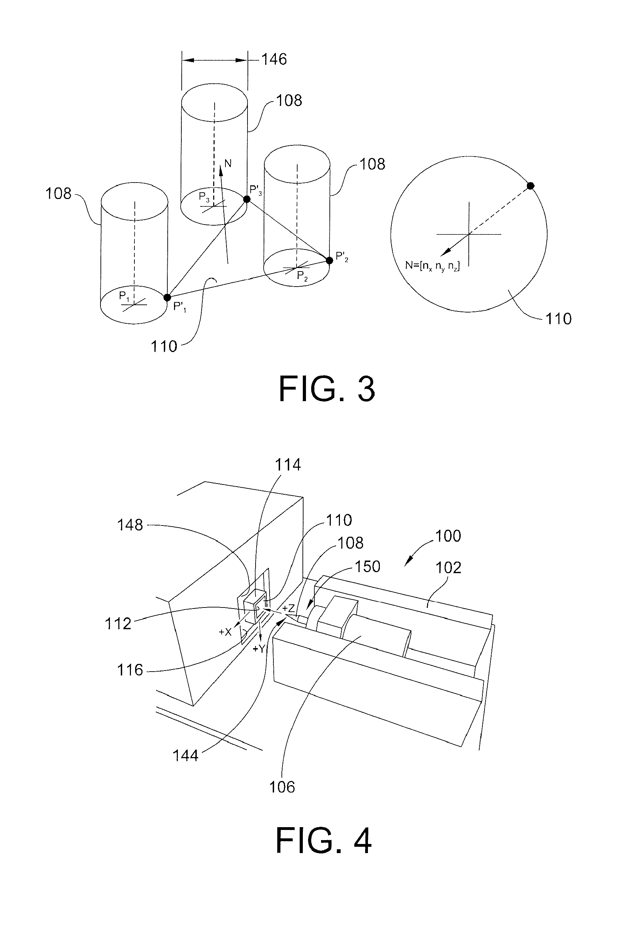

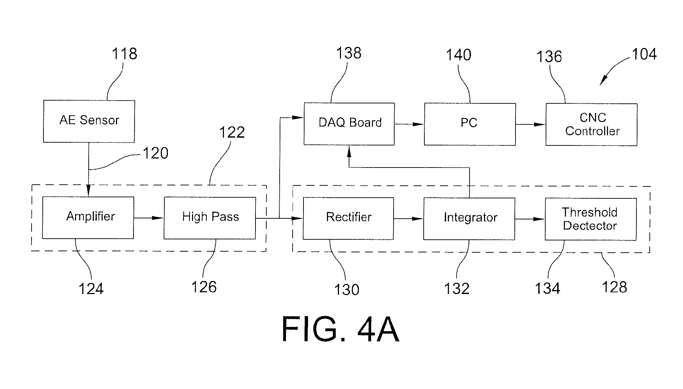

Specifically, FIG. 4 shows an exemplary embodiment of a machining apparatus 100, according to the invention, including a milling machine 102, and a touch-off detection-based control arrangement 104, which is separately illustrated in FIG. 4A. The exemplary embodiment of the milling machine 102 is a 3-axis machine, having a head 106 configured for driving a tool 108, such as an end mill or a drill, about a Z axis, with the head 106 being operatively mounted, within the machine 102 in such a manner that the tool 108, or a work piece 112 may be moved along an X, Y, or the Z axis for touching off against, or machining a work piece surface 110 of the work piece 112. The work piece 112 is affixed to a mounting block 114, with the mounting block 114 being fixedly attached to a surface 116 of the milling machine 102.

As shown in FIG. 4A, the exemplary embodiment of the touch-off acoustic emission detection-based control arrangement 104 includes an acoustic emission (AE) sensor 118, which is physically and operatively connected to the work piece 112, in a manner described in greater detail below, for sensing acoustic emissions generated by contact of the tool 108 with the work piece surface 110. As further illustrated in FIG. 4A, the AE sensor 118 generates an output signal 120 which is fed to a preamplifier 122, including an amplifier 124 and a high band width filter 126. The preamplifier 122 provides an output signal to a touch-off detection arrangement 128, which includes a rectifier 130, an integrator 132, and a threshold detector 134. Output signals from the preamplifier 122 and the touch-off detection arrangement 128 are fed to a CNC controller 136, either directly, or via additional circuit components, such as a data acquisition card (DAQ board) 138 and a personal computer (PC) 140, for use in providing input parameters and controlling the milling machine 102. It will be recognized, by those having skill in the art, that the particular configuration of the milling machine 102 and touch-off AE detection-based control arrangement 104 may vary considerably, in other embodiments of the invention, from those illustrated and described herein with respect to the exemplary embodiment shown in FIGS. 4 and 4A.

In its most straightforward form, the exemplary embodiment of the method, according to the invention, is intended to be used when the relative orientations of a tool and work piece are already known to within 50-3000 $\mu$m, which can be achieved with an automated system or by eye. The basis for the proposed tool placement system is discussed and implementation is described. Accuracies achieved with the system are demonstrated through a series of experiments. An analytical model is described and evaluated for the purpose of understanding factors that affect system accuracy and for use in determining parameters relating to machining, such as tool dimension and shape, spindle run-out, and location of the surface of a work piece in various forms of the invention.

**Development of Touch-off Methodology**

**System Basis.** The AE-based touch-off system 100 works by detecting acoustic emission bursts generated when the rotating micro-endmill or micro-drill 108 makes contact with the work piece surface 110 during a touch-off operation. A plot of an AE signal resulting from contact between a 508 $\mu$m diameter endmill 108, rotating at 74000 rpm and advancing along its axis of rotation Z, and an aluminum work piece surface 110 that lies in a plane perpendicular to the axis Z of the tool 108 is shown in Fig. l. As can be seen in the figure, the AE signal exhibits a second order decaying impulse response following tool-work piece contact. Care must be taken in setting any threshold used to detect a burst resulting from contact since the magnitude of the burst may not be large relative to AE noise.

**Touch-off Algorithms.** In a simple application of the invention, the fundamental micro-endmill or micro-drill touch-off process used to detect a surface involves having a rotating tool 108 advance towards a work piece 112 along its axis of rotation Z until contact is detected. The work piece surface 110 is assumed to be strictly perpendicular to the tool axis Z and the tool 108 is assumed to not move in any other direction.

In practice, the work piece surface 110 will not always be strictly perpendicular to the tool axis Z. Furthermore, in order to accommodate prismatic parts with a variety of features it may be necessary to touch-off against an inclined surface. Also, because micro-scale parts are commonly fixtured with adhesive during micro-machining operations, it is very difficult to ensure that the part touch-off surface will be strictly perpendicular to a tool following fixturing. In such cases, if touch-off is performed with an endmill 108, both the orientation of the work piece 112 and the exact point of contact 142 between the surface 110 of the work piece 112 and endmill will be unknown, as illustrated in Fig. 2A. Also, as shown in Fig. 2B, if touch-off is performed with a drill 108, the orientation of the work piece 112 will still be unknown though the exact point of contact 142 can be determined.

To accommodate cases where the work piece touch-off surface 110 is perpendicular to a tool axis Z and where it is not, two touch-off algorithms have been developed in accordance with the invention, to detect the relative positions of a tool 108 and work piece surface 110. A single point touch-off algorithm may be used when a surface has been previously machined flat so that the tool 108 is known to be perpendicular to the surface 110 or during rough touch-off operations where accuracy is not as important. Using this algorithm, the CNC controller 136 advances the tip 144 of the rotating tool 108, along its axis of rotation Z, towards the work piece l 12 at a constant rate. When the AE signal exceeds a pre-set threshold the CNC controller 136 stops relative motion along the Z axis, between the tool 108 and the work piece surface 110, zeros it at the location where the threshold was exceeded, and retracts the tool.

The multipoint touch-off algorithm is suitable for cases where the orientation of a work piece surface 110 is not perpendicular to the tool axis Z and its inclination is unknown. Using this algorithm, the CNC controller 136 performs a single point touch-off operation on three points on a work piece surface 110, as shown in Fig. 3. These points are selected such that they are not in line with each other and are at least a tool diameter 146 apart. Assuming that the surface is planar, the xyz coordinates of the contact points will lie in a plane coincident with the work piece surface 110.

If the xyz coordinates of the tool 108 during the three contacts are expressed as vectors $P_1$, $P_2$, and $P_3$, a vector normal to the work piece surface 110, $N = [n_x\ n_y\ n_z]$, can be calculated as

$$N = \frac{(P_2 - P_1) \times (P_3 - P_1)}{\left\| (P_2 - P_1) \times (P_3 - P_1) \right\|} \quad . \quad (1)$$

Then, the inclination angle $\phi$ of the work piece surface 110 can be calculated as

$$\phi = \arctan\left( \frac{\sqrt{n_x^2 + n_y^2}}{n_z} \right). \qquad (2)$$

Knowledge of $\phi$ may also be useful in verifying good fixturing, or detecting part movement after a machining operation.

A plane can be fully defined in a coordinate system by a normal vector and the coordinates of any point on the plane. Therefore, by calculating the coordinate of a point on the work piece surface 110, the position of the work piece surface 110 relative to the tool 108 can be completely described. The actual location of tool-work piece contact $P'_n$ during any of the touch-off operations is defined as,

$$P'_n = \left[ x_n - \frac{n_x R}{\sqrt{n_x^2 + n_y^2}}, \quad y_n - \frac{n_y R}{\sqrt{n_x^2 + n_y^2}}, \quad z_n \right]. \qquad (3)$$

**Experimental Setup and Test Design**

A 3-axis micro-scale machine tool (mMT) 102, depicted schematically in Fig. 4, was fitted with the touch-off system 104 shown in FIG. 4A. Initially, the ability of the mMT 102 to halt an advancing tool 108 was evaluated in order to select a tool approach speed that would result in minimal work piece damage upon touch-off. A series of experiments was then conducted to evaluate system performance when different tools 108 and work piece surfaces 110 are used.

**System Physical Configuration.** The aluminum work piece mounting block 114 was machined to fit onto a stage 148 of the 3-axis mMT 102 and a Physical Acoustics Nano30 AE sensor 118 was spring-loaded into a cavity (not shown) in the mounting block 114. The sensor 118 was selected for its high bandwidth and small size. Dow Corning high-vacuum grease was applied at the sensor-mounting block interface to minimize AE signal losses due to wave propagation through air gaps. Work pieces 112 were attached to the mounting block 114 using Aquabond™, a thermally activated fixturing adhesive.

The signal 120 from the AE sensor 118 was amplified by 60 dB, in order to insure that very small burst could be detected, and filtered by a high-pass filter 126 with a cutoff frequency of 20 kHz inside a Physical Acoustics 2/4/6c preamplifier 122. A rectification and integration circuit 130, 132 further conditioned the signal 120. The raw output from the preamplifier and the processed output from the integrator were monitored with a National Instruments PCI 6115 high-speed data acquisition card 138. The processed signal was also fed into a programmable threshold detector 134, which sends a signal to a CNC controller 136 when contact is detected. The signal is used to command the CNC controller 136 to halt and adjust the zero of the advancing z-stage 148.

**Touch-off Approach Speed Selection.** A fundamental concern with a contact-based system is that upon initial contact, a tool 108 could cause damage to a work piece 112 or itself before its advancement could be halted. The maximum rate at which a tool 108 can be advanced toward a work piece 112 without causing significant surface damage is dependent on how fast an AE burst can be detected and how fast the motion of the tool 108 can be arrested.

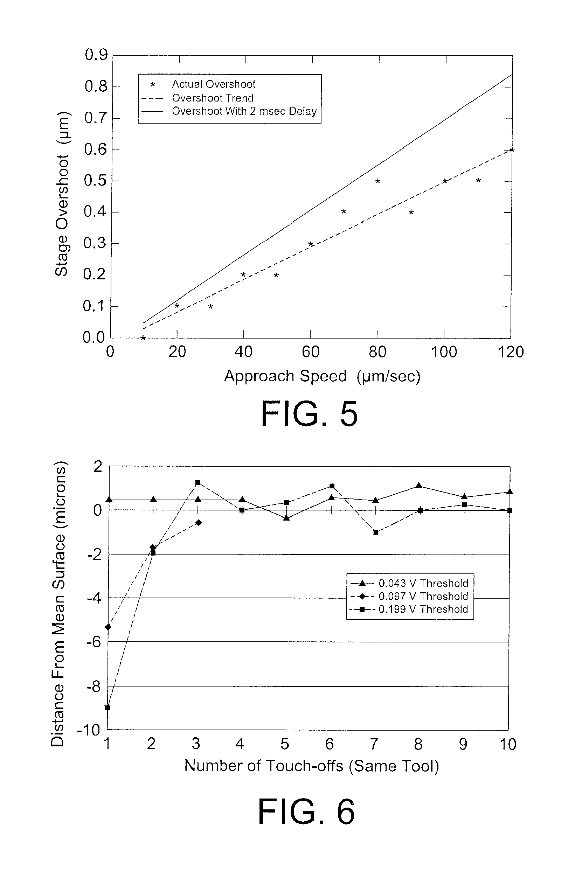

In order to determine the amount of stage overshoot that may occur during the touch-off process, a series of experiments was conducted where the z-stage 148 of the mMT 102, upon which the tool 108 was mounted by a spindle 150, was moved at a given speed and then commanded to stop at a predetermined point. The resultant stage overshoot values are shown in Fig. 5. Based on the data, the amount of overshoot was determined to be linearly dependent on stage speed. An estimate of stage overshoot based on initial stage speed and an assumed 2-millisecond touch-off detection delay is also shown in Fig. 5. An approach speed of 50 μm per second was selected for touch-off operations based on this estimate. The overshoot from such an approach speed should result in only 0.3 μm of surface damage, which is less than the roughness of many micro-machined surfaces 110.

**Test Conditions.** In order to evaluate the touch-off detection system, tests were performed in which two-flute endmills 108 with diameters of 508, 254, and 50.8 μm as well as 508 and 254 μm diameter drills 108 were used to detect surfaces 110 of varying roughness as listed in Table 1. Surface detection with the 508 and 254 μm diameter drills 108 and the 50.8 μm diameter endmills 108 was carried out using the single point touch-off algorithm. The single point algorithm could be used with the 50.8 μm endmills 108 because the test surface 110 was prepared by machining it perpendicular to the tool 108. In the case of the larger diameter endmills 108, the multipoint touch-off algorithm was used because the tool diameter 146 was large relative to small inclinations in the unprepared touch-off surface 110. Once a plane was fit to the data collected with the multipoint touch-off algorithm, the predicted axial location of the surface 10 in line with the axis Z of the tool 108 was calculated.

Table 1 Experimental work piece surface conditions

| Material | Ra (μm) |
|---|---|
| A16061-T6 | 0.5 |
|  | 0.03 |
|  | 0.38 |
| 304 Stainless Steel | 0.22 |
|  | 0.05 |
| Low Carbon Steel | 0.97 |

In order to verify the accuracy of each touch-off operation, a feature of a specified depth was milled (a slot) or drilled (a hole) following each operation. The resultant artifact was scanned with a Wyco white-light inferometer. Based on the Wyco data the depth of each feature was measured. In order to avoid ambiguity as to the exact location of the original surface 110, all depth measurements were made relative to a plane fit through the surface height data of the original work piece surface (the mean surface plane). The distance from the mean surface plane at which contact was detected was calculated as the difference between the commanded depth and the measured depth. Hence, a positive distance indicated that contact was detected before a tool 108 passed through the mean surface plane (undershoot), and a negative distance indicated that contact was detected after a tool 108 had passed through the mean surface plane (overshoot).

**Experimentation Results**

**Endmill Touch-off Results.** The results of the experiments with the tool touch-off system are given in Table 2, which summarizes the errors from the tests. Table 2 shows that the detection location varies with tool diameter 146, surface roughness, work piece tilt, and burst detection threshold. Rougher surfaces 110 tend to result in contact detection a greater positive distance from the mean surface plane. Similarly, contact tends to occur a greater positive distance from the mean surface plane with larger diameter endmills 108, and with lower burst detection thresholds.

Table 2 Micro-Endmill Touch-off Overshoot/Undershoot

|  | Dia. | Ra | Tilt | Threshold |  | Distance from Mean Surface Plane (μm) | | |
|---|---|---|---|---|---|---|---|---|
|  | (μm) | (μm) | (deg) | (mV) | Trials | Ave | Min | Max |
| A1 | 508 | 0.03 | 0.30 | 43 | 4 | 0.12 | -0.25 | 0.70 |

(continued)

| | Dia. | Ra | Tilt | Threshold | | Distance from Mean Surface Plane (µm) | | |
|---|---|---|---|---|---|---|---|---|
| | (µm) | (µm) | (deg) | (mV) | Trials | Ave | Min | Max |
| 6061-T6 | 508 | 0.03 | 0.32 | 97 | 4 | -0.27 | -0.71 | -0.02 |
| | 508 | 0.38 | 0.00 | 97 | 3 | 1.30 | 0.53 | 1.90 |
| | 254 | 0.03 | 0.32 | 43 | 4 | -0.59 | -0.88 | -0.25 |
| | 254 | 0.03 | 0.36 | 97 | 4 | -0.38 | -0.52 | -0.21 |
| | 254 | 0.38 | 0.00 | 97 | 3 | 0.61 | -0.09 | 0.97 |
| | 254 | 0.50 | 0.22 | 199 | 3 | 0.61 | 0.37 | 0.79 |
| | 50.8 | 0.38 | 0.00 | 43 | 10 | 0.43 | -0.34 | 1.01 |
| 304 Stainless Steel | 254 | 0.05 | 0.53 | 199 | 4 | -0.61 | -1.46 | 0.10 |
| | 254 | 0.05 | 0.42 | 43 | 4 | -1.03 | -2.99 | 0.53 |
| | 254 | 0.22 | 0.60 | 199 | 4 | 0.78 | -0.70 | 2.97 |
| | 254 | 0.22 | 0.24 | 43 | 4 | 0.28 | 0.04 | 0.42 |
| Low Carbon Steel | 254 | 0.97 | 0.46 | 97 | 3 | 3.20 | 3.07 | 3.35 |

The effect of the burst detection threshold is particularly pronounced for very small diameter endmills 108. Figure 6 shows the error from a series of successive touch-off operations using an initially sharp 50.8 µm diameter endmill 108 and detection thresholds of 0.043, 0.097, and 0.199 volts. Figure 6 shows that for small diameter tools 108, when the burst detection threshold is not set low enough the tool 108 will overshoot the mean surface plane by several microns during the first few touch-off operations with a fresh tool 108. After the first few operations the overshoot disappears. This is possibly due to tool tip 144 wear that would result in a greater area of tool-work piece contact and generate larger AE bursts. In order to avoid this varying error a low detection threshold should be used.

Due to the high accuracy of the micro-endmill touch-off operation it was found that features as shallow as a few microns in depth could be consistently milled. As an example, a feature that was milled 4 µm deeper than the surface detected via touch-off with a 50.8 µm diameter endmill, as measured with a Wyco white light inferometer, was actually 4 µm deep.

**Drill Touch-off Results.** Several sets of touch-off experiments were conducted in which surface finish, material type, burst detection threshold, and drill diameter 146 were varied. The results of these tests are shown in Table 3. The data show that the detection of contact 142 between a micro-drill 108 and a work piece 112 tended to occur after the drill tip 144 had penetrated past the mean surface plane. The resulting overshoot is likely due to the small initial contact area 142 between the chisel edge of the micro-drill 108 and work piece 112. A reduced burst detection threshold or increased surface roughness tended to reduce this overshoot.

Table 3 Micro-Drill Touch-off Overshoot/Undershoot

| | Dia. | Ra | Threshold | | Distance from Mean Surface Plane (µm) | | |
|---|---|---|---|---|---|---|---|
| | (µm) | (µm) | (mV) | Trials | Ave | Min | Max |
| A1 6061-T6 | 508 | 0.38 | 97 | 3 | -2.22 | -2.50 | -1.95 |
| | 254 | 0.03 | 43 | 4 | -0.69 | -1.30 | -0.40 |
| | 254 | 0.03 | 97 | 4 | -0.99 | -1.35 | -0.60 |
| | 254 | 0.31 | 43 | 5 | -0.48 | -0.80 | 0.30 |
| | 254 | 0.38 | 97 | 3 | -3.49 | -4.60 | -2.80 |
| 304 Stainless Steel | 254 | 0.05 | 199 | 3 | -1.50 | -1.70 | -1.20 |
| | 254 | 0.05 | 43 | 5 | -1.04 | -1.55 | -0.35 |
| | 254 | 0.22 | 199 | 4 | -0.10 | -0.50 | 0.30 |
| | 254 | 0.22 | 43 | 5 | -0.18 | -0.70 | 0.50 |
| Low Carbon | 254 | 0.97 | 97 | 3 | -0.37 | -2.98 | 1.88 |
| | 254 | 1.03 | 43 | 5 | 1.07 | 0.30 | 3.60 |

(continued)

|  | Dia. | Ra | Threshold |  | Distance from Mean Surface Plane ($\mu$m) | | |
|---|---|---|---|---|---|---|---|
|  | ($\mu$m) | ($\mu$m) | (mV) | Trials | Ave | Min | Max |
| Steel |  |  |  |  |  |  |  |

**Surface Damage Due to Touch-off.** The damage done to a surface during the touch-off process, according to the invention, was studied for both micro-drills 108 and micro-endmills 108 as small as 254 $\mu$m in diameter. Micro-endmills 108 were found to generate AE bursts almost immediately after contact, and the ring-like marks left behind were typically obscured by the surface roughness of the work piece 110. Generally, any scratch marks, generated during touch-off according to the invention, can only be seen on very smooth surfaces 110 having a low surface roughness compared to the milled surface. Hence, touch-off with micro-endmills 108, during practice of the invention, typically results in surface damage depth no greater than the surface roughness.

By contrast, experimental results showed that micro drills 108 initially had a significantly smaller contact area 142 with a significantly smaller tangential velocity, resulting in less energy imparted to a surface 110 via rubbing/ploughing. Therefore, these tools 108 must penetrate a couple microns into a surface 110 before a detectable AE burst is generated, in practicing the invention. As a result, micro-drills 108 leave behind small pockmarks during touch-off with a diameter that is 7-15% of the diameter 146 of the tool 108. This does not present a problem however, provided the touch-off site is the location of a future hole and required depth accuracy is on the order of a couple microns.

**Modeling of the Micro-Endmill Touch-off Process**

**Development of Model.** During contact between a rotating endmill 108 and a work piece 112, the tip 144 of the endmill 108 scratches the work piece surface 110, generating acoustic emission bursts as illustrated in FIG. 1. Also, since the surface 110 is typically inclined and has roughness on the order of a few hundred nanometers, contact between the tool 108 and work piece 112 is intermittent as it cuts across the surface roughness profile of the work piece 112. As the tool 108 plunges farther into the work piece 112 the amount of tool-work piece contact increases which causes the magnitude of the bursts to increase until a detectable acoustic emission signal 120 is generated.

The touch-off process involves very shallow scratch depths (for example, 40 nm per tool revolution in the case of a tool 108 rotating at 74000 rpm and advancing at 50 $\mu$m per second), which are much smaller than the typical tip edge radius of 2 $\mu$m. Therefore, the scratching process is assumed to occur solely in the ploughing regime. The AE energy rate, in terms of $AE^2_{RMS}$, from ploughing can be considered proportional to the energy rate from the ploughing process proportionality constant accounts for the percentage of energy converted to acoustic emission, attenuation between the AE source and AE sensor, signal conversion, and signal processing gains. Hence, $AE_{RMS}$ can be calculated as,

$$AE^2_{RMS} = c_a \dot{W} \quad (4)$$

where $c_a$ is a proportionality constant and W is the energy rate for the ploughing process.

Energy rate during a single pass of a flute of the tool 108 can be calculated as the product of cutting velocity v and cutting force F. Also, the mean cutting force can be calculated as the product of volume ploughed per tool revolution M and a material constant $c_m$,

$$AE^2_{RMS} = c_a vF = c_a c_m v M . \quad (5)$$

Introduction of a material-system constant C, which is the product of $c_a$ and $c_m$ reduces Eq. 2 to,

$$AE^2_{RMS} = C v M . \quad (6)$$

Therefore, in order to estimate the $AE_{RMS}$ magnitude, an accurate estimate of the volume of material displaced during a full tool revolution is necessary. Such an estimate must account for the effects of work piece surface roughness, work piece orientation, and tool geometry.

The surface roughness of a work piece 112 can be described by the probability density function (pdf) of the height of surface points about the mean surface plane. The pdf can be readily constructed from profilometer data. The corresponding cumulative distribution function cdf(h) can then be used to calculate the likelihood P(h) of encountering material at a specified height h above the mean surface plane, i.e.,

$$P(h) = 1 - cdf(h) . \qquad (7)$$

Then, by applying Eq. 7 as a weighting factor during the calculation of tool-work piece intersection volume, the most likely volume of intersection can be calculated.

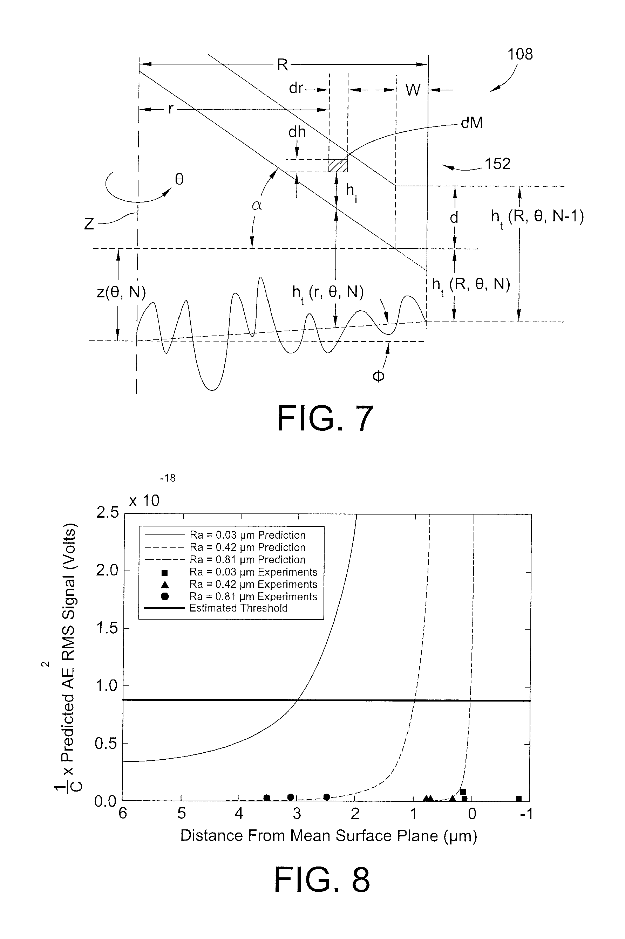

During the touch-off process, the bottom peripheral edges 144 of one or more flutes of the tool 108 make contact with a work piece 112 and displace a small amount of material. It is assumed that, due to manufacturing errors, one flute will axially protrude more that the others and be solely responsible for material displacement. Fig. 7 shows a cross-section of a micro-endmill flute 152 during the touch-off process. As shown in Fig. 7, R is defined as the tool radius, and r is defined as the radial distance between an infinitesimal volume element dM and the tool axis Z. The end edge concavity angle is defined as $\alpha$, and W is shown to be the length of the tool tip wear land. The distance between a point on the bottom of the tool at radial distance r from tool the tool axis and the mean surface plane is defined as $h_t$ and $h_i$ is the distance between the bottom of the tool and the infinitesimal volume element dM. Lastly, the axial distance between the tool tip and mean surface plane at r = 0 is defined as z.

The wear land on the bottom of the endmill flute 152 is assumed be perfectly flat. Hence, the endmill flute bottom profile geometry G(r) is described by a piecewise function of tool radius R, axial distance from tool axis r, wear land W, and end cutting edge concavity angle $\alpha$, viz.,

$$G(r) = \begin{cases} 0 & \text{if } R - r \le W \\ (R - W - r)\tan\alpha & \text{otherwise} \end{cases} . \qquad (8)$$

Given the axial approach speed f of an endmill 108, and the rotational speed of the endmill 108 in rpm S, the distance axially traveled by a flute 152 per revolution d can be calculated as

$$d = 60\frac{f}{S} . \qquad (9)$$

Then, given the initial z height of the tool $z_0$, the rotation number N, the tool rotation angle $\theta$, and the inclination angle of the work piece relative to the tool axis $\phi$, the distance between any point on the bottom of a tool flute and the mean work piece surface can be calculated as,

$$h_t(r, \theta, N) = z_0 - d\frac{(2\pi N + \theta)}{2\pi} + r\tan\phi\sin\theta + G(r) . \qquad (10)$$

The probable volume of material displaced during a full revolution of an endmill can be found by integrating the probability of contacting material over the revolved cross-section of the tool to get

$$M(N) = \int_0^{2\pi} \int_0^R \int_0^d P(h_t + h_i) r \, dh_i \, dr \, d\theta \qquad (11)$$

where

$$P\left(h_t + h_i\right) = 1 - \mathrm{cdf}\left(\frac{z_0 - d\frac{(2\pi N + \theta)}{2\pi} +}{r\tan\phi\sin\theta + G(r) + h_i}\right). \qquad (12)$$

By multiplying tool tangential velocity by the volume of material displaced, the $AE_{RMS}$ signal strength is estimated by

$$AE^2{}_{RMS}(N) = C\frac{2\pi S}{60}\int_0^{2\pi}\int_0^R\int_0^d P\left(h_t\right)r^2\,dh_i\,dr\,d\theta. \qquad (13)$$

Equation 13 can then be readily solved via numerical integration in order to simulate touch-off against a surface with arbitrary surface roughness characteristics. Also, in order to better understand the model output, the tool rotation number N at each simulation step can be converted to distance between the tool tip and mean surface plane $d_p$ via the formula

$$d_p = z_0 - Nd - R\tan\phi. \qquad (14)$$

**Calibration of Model.** In order to calculate the material-system coefficient C, a series of calibration tests was conducted in which a 254 $\mu$m diameter endmill 108 rotating at 74000 rpm and advancing at 50 $\mu$m per second was used to touch-off against an aluminum work piece 112. The work piece 112 was prepared such that it had three sections with different surface roughness: a section with Ra = 0.03 $\mu$m, a section with Ra = 0.42 $\mu$m, and a section with Ra = 0.81 $\mu$m. The inclination angle of the work piece 112, relative to the axis Z of the endmills 108 was 0.16 degrees. A detection threshold of 0.097 volts was also selected.

The empirical cdf for each surface 110 was generated from profilometer data. Then the empirical cdfs, surface inclination angle, tool geometry, tool approach speed, and tool rotational speed were input to the touch-off model (Eqns. 8, 9, 10, 12 and 13). The model outputs for all cases were then calculated with the unknown system-material proportionally constant C set to unity. This had the effect of scaling the desired model output $AE^2{}_{RMS}$ by 1 / C. The scaled model outputs were then used to create the predicted $AE^2{}_{RMS}$ (AE energy rate) curves shown in Fig. 8.

Points were plotted in Fig. 8 at distances from the mean surface plane where touch-off was detected in the calibration tests. A detection threshold where $AE^2{}_{RMS}$ = 8.7835 x $10^{-19}$ volts was then found which minimized the difference between the predicted and average experimental detection distances from the mean surface plane via a least squares fit. However, since C was set to unity when generating the curves, the estimated $AE^2{}_{RMS}$ signal strength at the threshold did not match up with the actual squared touch-off detection threshold of 9.409 x $10^{-3}$ volts. Hence, the proportionality constant C was calculated such that it would scale the model output of 8.7835 x $10^{-19}$ volts to the known squared output of 9.409 x $10^{-3}$ volts. In this way the proportionality constant C of 1.0712 x $10^{16}$ was found. This proportionality constant is only applicable for touch-off against an aluminum surface 110 using the setup described above. In other embodiments of the invention, those having skill in the art will recognize that an appropriate proportionally constant may be readily calculated for other materials and/or setups, in accordance with the invention in the manner described herein.

**Validation of Model.** Each of the touch-off tests on aluminum listed in Table 2, that were within the range of roughness values used in calibration, were simulated using the calibrated model and the test conditions described above. The results, listed in Table 4, show that the model does a good job of capturing the relative changes in touch-off error that result from changing touch-off conditions. However, the model tended to predict touch-off about 0.65 $\mu$m before it actually occurred in experiments. This trend may be partly due to delays in the touch-off system hardware that are not accounted for by the model.

Table 4 Model Verification Simulations

| Dia. (μm) | Ra (μm) | Tilt (deg) | Threshold (mV) | Distance From Mean Surface Plane (μm) | | Model Error (μm) |
|---|---|---|---|---|---|---|
| | | | | Average Experimental | Model Predicted | |
| 508 | 0.03 | 0.30 | 43 | 0.12 | 0.366 | 0.25 |
| 508 | 0.03 | 0.32 | 97 | -0.27 | 0.180 | 0.45 |
| 508 | 0.38 | 0.00 | 97 | 1.30 | 2.014 | 0.71 |
| 254 | 0.03 | 0.32 | 43 | -0.59 | 0.235 | 0.82 |
| 254 | 0.03 | 0.36 | 97 | -0.38 | 0.104 | 0.48 |
| 254 | 0.38 | 0.00 | 97 | 0.61 | 1.608 | 1.00 |
| 254 | 0.50 | 0.22 | 199 | 0.61 | 1.075 | 0.46 |
| 50.8 | 0.38 | 0.00 | 43 | 0.43 | 1.243 | 0.82 |

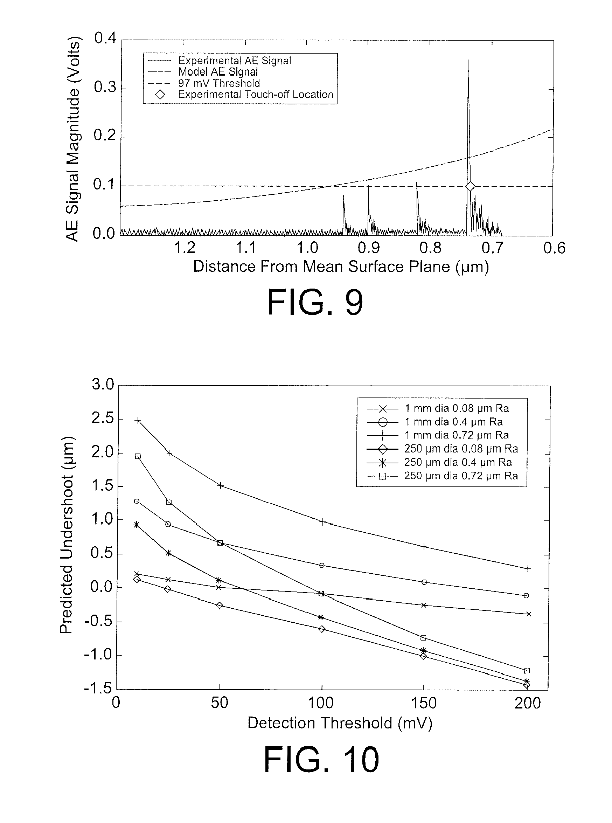

Additionally, the model-predicted-trend of increasing AE burst magnitude with increasing penetration of a tool into a work piece was observed experimentally. FIG. 9 shows the AE signal from touch-off between a 254 μm diameter endmill 108 rotating at 74000 rpm and the 0.42 μm Ra surface used for model calibration. As shown in FIG. 9, four bursts of increasing magnitude were generated by tool-work piece contact before the detection threshold was exceeded.

**Model Based Analysis of Touch-off Process**

The micro-endmill touch-off model provides a means to qualitatively examine the effects of touch-off conditions on surface detection error. To this end, five sets of simulations were conducted to determine the relative effects of touch-off parameters on surface detection error. The test matrix for each set is given in Table 5. For a given simulation set, parameters not varied were set to the nominal values given in Table 6. In all cases a surface roughness profile with a normal distribution is assumed.

**Table 5 Varied Simulation Parameters Sets**

| Set | Parameters | |
|---|---|---|
| 1 | Threshold (mV) | 10, 25, 50, 100, 150, 200, 300 |
| | Diameter (μm) | 250, 500, 750, 1000 |
| | Ra (μm) | 0.08, 0.24, 0.4, 0.64, 0.72 |
| 2 | φ (deg) | 0, 0.2, 0.4, 0.6, 0.8, 1.0 |
| | Ra (μm) | 0.08, 0.4, 0.72 |
| 3 | Diameter (um) | 250, 500, 750, 1000 |
| | α (deg) | 3,5,7,9 |
| 4 | Wear W (μm) | 0, 1, 2, 3, 4 |
| | α (deg) | 3, 5, 7, 9 |
| 5 | Diameter (μm) | 250, 500, 750, 1000 |
| | Wear W (μm) | 0, 1, 2, 3, 4 |

**Table 6 Nominal Simulation Parameters**

| | |
|---|---|
| Material | Aluminum |
| Rotational Speed S | 74000 RPM |
| Tool Advancement Rate f | 50 μm per second |
| Tool Radius R | 250 μm |
| End Edge Concavity Angle α | 3 degrees |
| Workpiece Inclination Angle φ | 0.3 degrees |
| Wear Land W | 0 μm (new) |

(continued)

| Material | Aluminum |
|---|---|
| Surface Roughness (Ra) | 0.4 μm |
| Threshold | 100 mV |

**Tool Size, Threshold, and Surface Roughness Effects.** Some of the model outputs from the first simulation set are shown in Fig. 10. As expected, the simulations showed that increased surface roughness, a lower burst detection threshold, or increased tool diameter result in greater workpiece mean surface plane undershoot (or less overshoot). The simulations also predicted that, among these factors, surface roughness its greatest effect on surface detection undershoot when a low burst detection threshold or large tool diameter 146 is used. Also, the effect of tool diameter 146 becomes more significant with increasing surface roughness. Furthermore, the effect of increasing tool diameter 146 was predicted to decrease as tool diameter 146 was increased.

**Surface Tilt Effect.** The second set of simulations indicated that an endmill 108 would plunge farther into a work piece 112 before a detectable AE burst is generated if the surface 110 was tilted. This is because the amount of material that can be scratched during a single tool revolution is smaller when the work piece 112 is tilted. The overall effect of tilt was predicted to be about 75 nm for each tenth of a degree of tilt. Hence, for highly titled surface, tilt can become the dominant effect

**Tool Geometry Effects.** The third and fourth sets of simulations were intended to determine the relative effects of tool geometry. These simulations showed that a small end edge concavity angle is predicted to allow a surface 110 to be detected sooner. This is because a smaller end edge concavity angle results in a larger area of tool-work piece engagement for a given depth of tool penetration. Also, the effect of the end edge concavity angle is approximately the same regardless of the tool diameter or wear. However, the effect of tool diameter 146, which is easy to measure, is predicted to be several times larger than the effect of the more difficult to measure end edge concavity angle. Also, the end edge concavity angle effect is reduced as tool tip wear increases. This is because with a large wear land the area of tool-work piece engagement is already relatively large so the tool 108 doesn't have to penetrate to a depth at which end edge concavity angle starts having a large effect.

The last set of simulations indicated that the effect of tool diameter 146 dominates the effect of tool tip wear. For example, the simulations showed that setting the wear land as large at 4 μm resulted in less than 130 nm of additional surface undershoot. By contrast, increasing tool diameter from 250 to 500 μm resulted in an additional undershoot of nearly 400 nm.

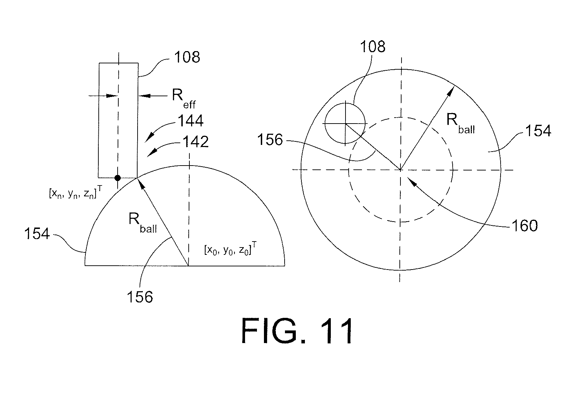

**A Contact Based Method of Measuring Tool Runout for In-Process Control.** FIG. 11 illustrates the manner in which the invention may be utilized for determining runout of the tool 108.

**Motivation for a New Runout Measurement Technique:**

Online and offline technologies, according to the invention, were also developed, to determine spindle and/or tool runout in a manner that is usable for effecting concomitant improvements in runout and associated spindle design improvements. The current method of measuring endmill runout relies on time-consuming manual measurements of tool position parameters that change each time a tool 108 is loaded. Furthermore, only static runout can be measured directly with the current technique and dynamic runout must be estimated by use of a computer simulation. Therefore, in order to deal with these issues, a new method of rapidly and automatically estimating dynamic runout parameters is provided, utilizing information determined through AE detection, in accordance with the invention.

Runout Measurement Method:

A runout measurement method, according to the invention, is based on detecting contact between a rotating tool 108 and a standardized work piece via acoustic emission, in the manner described herein above. The effective diameter 146 of a rotating endmill 108, which includes dynamic runout, is measured by touching-off against multiple points on an artifact 154 of precisely known shape. Various types of artifacts can be used for this purpose. However, due to the low cost of ultra high-precision grade-3 ball bearings, in a preferred exemplary embodiment of the invention, a spherical artifact 154, 0.125" in diameter, was selected. An artifact 154 suitable for use in practicing this aspect of the invention would preferably possess no more than 3 millionths of an inch (0.762 μm) of deviation between the surface point of the smallest and largest radii $R_{ball}$ of the sphere 154. The diameter (2 x $R_{ball}$) would also be known to within ± 0.25 μm.

As can be seen in Figure 11, a tool 108, in the form of an endmill, for example, when lowered onto a sphere 154, will first make contact 142 on a bottom edge 144 of the tool 108 (endmill). Furthermore, the exact point of contact 142 will lie along a line 156 connecting the center Z of the tool 108, provided by CNC output, and the center 160 of the sphere 154.

When a new sphere 154 is mounted and a new tool 108 is used to touch-off against that sphere 154, there are 4 unknown parameters: the xyz coordinates of the center 160 of the sphere 154, and the effective radius (maximum possible radius of rotation) $R_{eff}$ of the tool. These parameters are related by Equation 15, which is simply the formula for a point on the surface of a sphere adjusted to account for the offset CNC state output coordinates.

$$\left(x_n - \frac{(x_n - x_o)R_{eff}}{\sqrt{(x_n - x_o)^2 + (y_n - y_o)^2}} - x_o\right)^2 + \left(y_n - \frac{(y_n - y_o)R_{eff}}{\sqrt{(x_n - x_o)^2 + (y_n - y_o)^2}} - y_o\right)^2 + (z_n - z_o)^2 = R_{ball}^2$$

$$(15)$$

Since there are 4 initial unknowns, a minimum of four touch-off operations are required to mathematically constrain the system. However, additional touch-off operations can be used to over-constrain the system and provide better results in the face various measurement errors. Numerical nonlinear regression algorithms readily provided the sought after parameters.

As described herein above, tests have verified that it is possible to use the AE-based touch-off system to detect contact between a tool and a very hard curved surface, such as the ball bearing 154 acting as the standardized work piece in the exemplary embodiment. Furthermore, that contact does not seen be cause damage to the tool.

Once the runout has been calculated, the CNC controller may then utilize the calculated runout to, compensate for the runout in such a manner that accuracy and precision of machining processes utilizing the tool 108 are improved.

All references, including publications, patent applications, and patents cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventor for carrying out the invention. Variations of those preferred embodiments may become apparent to those of ordinary skill in the art upon reading the foregoing description. The inventor expects skilled artisans to employ such variations as appropriate, and the inventor intends for the invention to be practiced otherwise than as specifically described herein. Accordingly, this invention includes all modifications and equivalents of the subject matter within the scope of the invention as permitted by applicable law. Moreover, any combination of the above-described elements in all possible variations thereof is encompassed by the invention unless otherwise indicated herein or otherwise clearly contradicted by context.

**Claims**

1.   A method for inputting parameters relating to a cutting tool and the surface of a work piece to an automated machining center, the method comprising determining one or more of the parameters from acoustic emissions (AE) generated when the cutting tool is brought into contact with the work piece and/or a reference surface.

2.   A method for determining a parameter relating to one or both of a cutting tool and the surface of a work piece, wherein both the cutting tool and the work piece are attached to an automated machining apparatus having a machine drive for monitoring and controlling a relative position of a cutting tool with respect to the work piece, the method comprising:

   monitoring positions of the cutting tool, while utilizing the machine drive for bringing the cutting tool into initial contact with surface of the work piece;
   detecting a threshold value of acoustic emissions (AE) generated by the initial contact between the tool and the surface of the work piece;

recording the position of the tool when the threshold value of AE is detected, to thereby indicate initial contact between the tool and the surface of the work piece; and

computing the parameter relating to one or both of the cutting tool and the surface of the work piece from the position of the tool recorded when the threshold value of AE was detected.

3. The method of claim 1 or 2, further comprising, performing a machining operation on the work piece with the cutting tool controlled by the machining apparatus in a manner consistent with the computed parameter.

4. The method of one of claims 1 to 3, wherein, the parameter to be determined is a dimension of the cutting tool, and the method comprises computing the dimension of the cutting tool.

5. The method of one of claims 1 to 4, wherein, the parameter to be computed is a location of the surface of the work piece, and the method further comprises, computing the location of the surface of the workpiece.

6. The method of one of claims 1 to 5, wherein, the work piece is a standardized artifact of known configuration attached to the machining apparatus, the parameter to be determined is runout of the tool, and the method further comprises determining the runout of the cutting tool.

7. The method of one of claims 1 to 6, further comprising, computing a virtual surface corresponding to the surface of the work piece, and utilizing the virtual surface for performing a machining operation on the work piece with the cutting tool controlled by the machining apparatus in a manner consistent with the computed parameter.

8. The method of one of claims 1 to 7, further comprising:

monitoring positions of the cutting tool, while utilizing the machine drive for bringing the cutting tool into initial contact with two or more spaced-apart multiple locations on the surface of the work piece;

detecting a threshold value of acoustic emissions (AE) generated by the initial contact between the tool and the surface of the work piece at each of the multiple locations;

recording the position of the tool when the threshold value of AE is detected at each of the multiple locations, to thereby indicate initial contact between the tool and the surface of the work piece at each of the multiple locations; and

computing the parameter relating to one or both of the cutting tool and the surface of the work piece from the positions of the cutting tool recorded when the threshold value of AE was detected at the multiple locations of the cutting tool.

9. The method of one of claims 1 to 8, further comprising, computing a virtual surface corresponding to the surface of the work piece, and utilizing the virtual surface for performing a machining operation on the work piece with the cutting tool controlled by the machining apparatus in a manner consistent with the computed parameter.

10. An apparatus, for inputting parameters relating to a cutting tool and a surface of a work piece to an automated machining center, the apparatus comprising, an element for detecting acoustic emissions generated when the cutting tool is brought into contact with the work piece and/or a reference surface, and an element for determining one or more of the parameters from the detected acoustic emissions.

11. An apparatus for determining a parameter relating to one or both of a cutting tool and the surface of a work piece, wherein both the cutting tool and the work piece are attached to an automated machining apparatus having a machine drive for monitoring and controlling a relative position of a cutting tool with respect to the work piece, the apparatus comprising, a touch-off acoustic emission (AE) detection-based control arrangement including a CNC controller, an AE sensor for generating a output signal, and a threshold detector for receiving the output signal of the sensor and providing a threshold signal to the CNC controller, the AE detection-based control arrangement being configured for:

monitoring positions of the cutting tool, while utilizing the machine drive for bringing the cutting tool into initial contact with surface of the work piece;

detecting a threshold value of acoustic emissions (AE) generated by the initial contact between the tool and the surface of the work piece;

recording the position of the tool when the threshold value of AE is detected, to thereby indicate initial contact between the tool and the surface of the work piece; and

computing the parameter relating to one or both of the cutting tool and the surface of the work piece from the position of the tool recorded when the threshold value of AE was detected.

12. The apparatus of claim 10 or 11, wherein, the EA detection-based control arrangement is further configured for performing a machining operation on the work piece with the cutting tool controlled by the machining apparatus in a manner consistent with the computed parameter.

13. The apparatus of one of claims 10 to 12, wherein, the parameter to be determined is a dimension of the cutting tool, and the EA detection-based control arrangement is further configured for computing the dimension of the cutting tool.

14. The apparatus of one of claims 10 to 13, wherein, the parameter to be computed is a location of the surface of the work piece, and the EA detection-based control arrangement is further configured for computing the location of the surface of the work piece.

15. The apparatus of one of claims 10 to 14, wherein, the work piece is a standardized artifact of known configuration attached to the machining apparatus, the parameter to be determined is runout of the tool, and the EA detection-based control arrangement is further configured for determining the runout of the cutting tool.

16. The apparatus of one of claims 10 to 15, wherein the EA detection-based control arrangement is further configured for, computing a virtual surface corresponding to the surface of the work piece, and utilizing the virtual surface for performing a machining operation on the work piece with the cutting tool controlled by the machining apparatus in a manner consistent with the computed parameter.

17. The apparatus of one of claims 10 to 16, wherein, the EA detection-based control arrangement is further configured for:

monitoring positions of the cutting tool, while utilizing the machine drive for bringing the cutting tool into initial contact with two or more spaced-apart multiple locations on the surface of the work piece;
detecting a threshold value of acoustic emissions (AE) generated by the initial contact between the tool and the surface of the work piece at each of the multiple locations;
recording the position of the tool when the threshold value of AE is detected at each of the multiple locations, to thereby indicate initial contact between the tool and the surface of the work piece at each of the multiple locations; and
computing the parameter relating to one or both of the cutting tool and the surface of the work piece from the positions of the cutting tool recorded when the threshold value of AE was detected at the multiple locations of the cutting tool.

18. The apparatus of one of claims 10 to 17, wherein, the EA detection-based control arrangement is further configured for, computing a virtual surface corresponding to the surface of the work piece, and utilizing the virtual surface for performing a machining operation on the work piece with the cutting tool controlled by the machining apparatus in a manner consistent with the computed parameter.

FIG. 1

FIG. 2A

FIG. 2B

FIG. 3

FIG. 4

118

138    140    136    104

AE Sensor

122

| DAQ Board | → | PC | → | CNC Controller |

120

Amplifier    →    High Pass    →    Rectifier    →    Integrator    →    Threshold Dectector

124    126    130    132    134    128

# FIG. 4A

FIG. 5

FIG. 6

## FIG. 7

## FIG. 8

FIG. 9

FIG. 10

FIG. 11

**European Patent Office**

# EUROPEAN SEARCH REPORT

Application Number

EP 06 12 6222

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 163 850 A (GEN ELECTRIC) 5 March 1986 (1986-03-05) | 1-5, 7-14, 16-18 | INV. B23Q17/09 |
| A | * the whole document * | 6,15 | |
| A | GB 2 177 205 A (GEN ELECTRIC) 14 January 1987 (1987-01-14) * the whole document * | 1-18 | |
| A | DE 197 47 798 A1 (BOSCH GMBH ROBERT [DE]) 12 May 1999 (1999-05-12) * column 2, line 26 - column 3, line 48; figure 1 * | 1-18 | |
| A | JP 57 173462 A (SHIONO YOSHIAKI) 25 October 1982 (1982-10-25) * abstract * | 1-18 | |

**TECHNICAL FIELDS SEARCHED (IPC)**

B23Q

The present search report has been drawn up for all claims

| Place of search | Date of completion of the search | Examiner |
|---|---|---|
| Munich | 30 March 2007 | Antolí Jover, Jordi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 12 6222

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2007

| Patent document cited in search report | | Publication date | Patent family member(s) | | Publication date |
|---|---|---|---|---|---|
| GB 2163850 | A | 05-03-1986 | DE | 3530560 A1 | 13-03-1986 |
| | | | FR | 2569879 A1 | 07-03-1986 |
| | | | IT | 1200714 B | 27-01-1989 |
| | | | JP | 1751528 C | 08-04-1993 |
| | | | JP | 4036824 B | 17-06-1992 |
| | | | JP | 61086162 A | 01-05-1986 |
| | | | US | 4631683 A | 23-12-1986 |
| GB 2177205 | A | 14-01-1987 | DE | 3621049 A1 | 02-01-1987 |
| | | | FR | 2584181 A1 | 02-01-1987 |
| | | | IT | 1193261 B | 15-06-1988 |
| | | | JP | 2096364 C | 02-10-1996 |
| | | | JP | 8004995 B | 24-01-1996 |
| | | | JP | 62044360 A | 26-02-1987 |
| | | | US | 4704693 A | 03-11-1987 |
| DE 19747798 | A1 | 12-05-1999 | NONE | | |
| JP 57173462 | A | 25-10-1982 | NONE | | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 75072305 P

**Non-patent literature cited in the description**

- **LANGSTAFF G.** Development of Automation Technologies for Microfactory Automation. *Master's Thesis,* 2005
- **DORNFELD D. ; HANDY C.** Slip Detection Using Acoustic Emission Signal Analysis. *Proceedings - IEEE International Conference on Robotic and Automation,* 1987, 1868-1875
- **SHINODA H. ; ANDO S.** Ultrasonic Emission Tactile Sensor for Contact Localization and Characterization. *Proceedings - IEEE International Conference on Robotics and Automation,* 1994, 2536-2543
- **DUNEGON H. L.** An Acoustic Emission Technique for Measuring Surface Roughness. *DECI Technical Report #9810,* 1998, http://www.deci.com/publications.html
- **MBA D. ; COOKE A. ; RUBY D. ; HEWITT G.** Detection of Shaft-Seal Rubbing in Large-Scale Power Generation Turbines with Acoustic Emissions. Case Study. *Proceedings of the iInstitution of Mechanical Engineers, part A: Journal of Power and Energy,* 2004, vol. 218 (2), 71-81
- **YOUMIN L. ; CHI L. ; ATEF E.** Acoustic Emission Study of Lubricant Effect on Proximity Contact Recording. *IEEE Transactions on Magnetics,* 05 September 1997, vol. 33
- **DORNFELD D. ; CAI H. G.** An investigation of Grinding and Wheel Loading Using Acoustic Emission. *Journal of Engineering for Industry,* 1984, vol. 106, 28-33